# EUROPEAN PATENT SPECIFICATION

(11) **EP 2 621 442 B1**
(45) Date of publication and mention of the grant of the patent: **03.06.2015**
(21) Application number: 11781608.2
(22) Date of filing: 26.09.2011
(51) Int. Cl.: A61G 3/06, G01S 5/00, G01S 17/02

(54) **Method for the transfer of people on wheel-chair on/from public transport means**
Verfahren für den Transfer von Personen in einem Rollstuhl in/aus öffentliche(n) Verkehrsmittel(n)
Méthode permettant à des personnes en fauteuil roulant de monter dans un moyen de transport en commun et d'en descendre

(30) Priority: 27.09.2010 IT PI20100104
(43) Date of publication of application: 07.08.2013
(73) Proprietor: MP S.R.L., 50026 San Casciano Val di Pesa (IT)
(72) Inventor: PAOLACCI, Marco, I-52020 Laterina (AR) (IT)
(74) Representative: Leotta, Antonio
(86) International application number: PCT/IB2011/054218
(87) International publication number: WO 2012/042458

(56) References cited:
- WO-A2-2008/065686
- US-A- 4 576 539
- US-A1- 2008 189 005
- US-B1- 7 344 037

## Description

### Field of the Invention

The present invention relates to a method for the transfer of people on wheel-chair on/from public transport means through the use of an electric vehicle on wheels for transporting a person on wheel-chair including motor means, steering means, automatic drive means, and a wheel-chair supporting board connected to the vehicle chassis so as to be movable vertically and wireless remote communication means.

### Description of the Prior Art

For people with limited mobility on a wheelchair getting on/off public transport means, such as trains, buses or trams, various types of transfer devices are known, which are capable of supporting a wheelchair and transferring it from the public transport means floor to the floor of a location where the public transport means itself stops. These devices must be permanently associated to the public transport means at an access door thereof and perform the transfer through translation and/or rotation movements. These wheel-chairs transfer devices have several disadvantages. First, they must be installed in all transport means in which easy access for people on wheel-chairs is desired. Especially in the case of the public transport means, where there are many access doors, such as trains, the presence of the above-mentioned wheel-chair transfer devices is desirable at several access doors.

In addition, the prior art transfer devices are often operated manually or semi-automatically and require the intervention of an operator, and this prevents independent use by the person on wheelchair. In addition, these wheel-chair transfer devices permanently encumber a portion of the internal volume of the public transport means at the access door where they are installed, and require expensive installation and modification operations on the public transport means. WO 2008/065686, in the name of the same Applicant, describes a vehicle for the transport of wheel-chairs in public areas, In particular shopping centers, to allow a person on wheel-chair to perform specific tasks independently. The above-mentioned vehicle comprises a chassis, a plurality of wheels connected to the chassis, electric motor means, steering means, electric batteries, control means for driving the vehicle, a supporting board movable vertically with respect to the chassis with a boardwalk pivotally constrained to one side of the supporting board, obstacle detection means, GPS localization means or the like, and means for the exchange of information with an information system in the area to which the vehicle is assigned or with a box for housing the vehicle and recharging the batteries. By virtue of this structure, the vehicle allows a person on wheelchair to get him/herself on the supporting board of the vehicle with his/her wheelchair, to drive the vehicle safely within a specified public area to which the vehicle is assigned and to perform independently certain activities due to the possibility of vertical movement of the supporting board on which the wheelchair is placed.

### Summary of the Invention

The object of the present invention is to propose a system for the transfer of wheelchair for people with limited mobility from public transport means to specific parking areas located close to stop locations of the above-mentioned public transport means, and the reverse transfer, allowing reduced management total cost as compared to the prior art systems, with greater usability for the person on wheelchair.

According to an aspect of the present invention, the above-mentioned objects are achieved by means of a method for the transfer of people on wheel-chair on/from public transport means making use of a vehicle for transporting a person on a wheel-chair Including a chassis, at least three wheels pivotably connected to the chassis, motor means, steering means, automatic drive means, and a supporting board sliding vertically in said chassis and supporting the wheel-chair, and wireless remote communication means, the method of the present invention being characterized in that it includes the steps of:
- sending an activation signal to said vehicle;
- sending information about a transport means, where the person on wheel-chair has to board/get off, and information about a position to be reached by the vehicle, to said vehicle;
- automatic drive of the vehicle up to the position to be reached, the automatic drive being performed by means of said vehicle automatic drive means;
- aligning the vehicle in front of an access door of the transport means in a wheel-chair transfer state for transferring said person on wheel-chair from the vehicle to the transport means or vice-versa, said aligning being performed by the vehicle automatic drive means.

The method of the present invention allows making use of a vehicle for transporting people on wheel-chair to allow their getting on/off public transport means In Independent and automatic way also enabling high savings with respect to equipment to be installed on board of the above-mentioned public transport means.

In accordance with a preferred embodiment of the present invention, the above-mentioned method includes further steps of:
- associating a wireless remote communication device, capable of communicating with the wireless remote communication means of the vehicle, and geo-referenced localization means to said person on wheel-chair;
- providing said wireless remote communication device with information for Identifying a public transport means on which the person on wheel-chair has to travel;
and wherein a position to be reached by means of the automatic drive means corresponds to a position of the person on wheel-chair determined by said geo-referenced localization means associated to said person on wheel-chair.

In addition, advantageously, said step of associating occurs by enabling a cellular communication device equipped with geo-referenced localization means, belonging to the person on wheel-chair, to the communication with the vehicle. Also advantageously, providing said wireless remote communication device with Information, is performed by entering data concerning a travel document of the person on wheelchair.

Advantageously, information about the transport means where the person on wheel-chair has to board/get off, Include times and platforms of arrival and departure of the same, as well as information about position, configuration and dimension of said transport means access doors.

According to a specific embodiment of the method of the present Invention the above-mentioned information on the position and dimension of the transport means access doors are stored In RFID tags placed on said transport means and which are read by RFID tag readers provided on the vehicle.

Advantageously, the step of aligning the vehicle in front of an access door of the transport means takes place by means of proximity sensors of said vehicle.

Also advantageously, the vehicle comprises optic, radio and/or laser collimation means and the transport means includes elements which can be read by said collimation means.

Advantageously, the step of the vehicle automatic drive close to said position to be reached, by means of the automatic drive means, is performed by making use of stored maps concerning an area where the vehicle is used and the vehicle position determined by the geo-referenced localization means of the same vehicle.

### Brief Description of the Drawings

These and other features of the invention will be more readily understood from the following description of embodiments of the invention, provided as non-limitative examples, with reference to the attached figures, in which:
Figures 1a to 1c show a vehicle for transporting a person on wheel-chair;
Figure 2 shows a block diagram of the basic steps of a method according to the present invention for using the vehicle of Figure 1;
Figure 3 shows a flowchart of the method of the present Invention according to a specific embodiment;
Figures 4 and 5 show flowcharts of the method outlined in Figure 3, In the case of a get on operation and a get off operation of a person on wheelchair to/from a public transport means, respectively;
Figure 6 shows a vehicle for transporting people on wheel-chairs and other components of a system for carrying out a different embodiment of the method according to the present invention;
Figures 7a and 7b show schematic side views of the vehicle and the public transport means of Figure 6 in two different steps for positioning the vehicle at a public transport means access door;
Figures 8 and 10 show flowcharts of the method of the present Invention during execution of a get on operation and a get off operation, respectively, with the system of Figure 6;
Figures 9a to 9e show schematically a side view of a vehicle for transporting people on wheel-chair during the sequence of operations performed while carrying out the method according to the flowchart of Figure 8;
Figures 11a to 11e show schematically a side view of a vehicle for transporting people on wheel-chair during the sequence of operations performed while carrying out the method according to the flowchart of Figure 10.

### Detailed Description of Preferred Embodiments

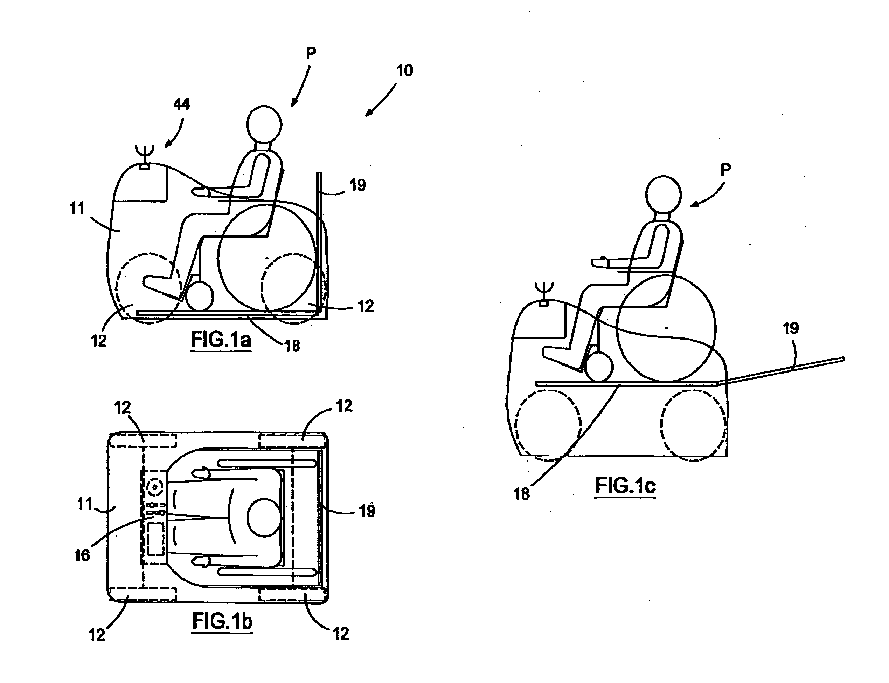

In Figure 1 there Is shown a prior art vehicle, 10, for transporting a person on wheel-chair, P. In Figure 1a a side view of the vehicle is represented, while in Figure 1b a top view thereof Is shown. A supporting board, 18, that supports the person on wheel-chair P, is connected to a chassis, 11, so as to be movable vertically, the chassis, 11, being provided with wheels 12. In Figure 1c the supporting board 18 is in a raised position. A boardwalk 19 is pivotally constrained to one side of the supporting board 18, and can be moved between a substantival vertical position, in which It acts as a retention element for the wheel-chair onboard of the vehicle 10, and a substantially horizontal position designed to allow a person on wheelchair P getting on and off. The vehicle is also equipped with motor means, steering means, and drive means, 16, which operate the above-mentioned motor means and steering means and the supporting board 18 with the related boardwalk 19. The drive means 16 are also automatic drive means which drive the vehicle 10 without intervention of the person on wheel-chair P.

The vehicle 10 is also equipped with wireless remote communication means, and with geo-referenced localization means, such as a GPS receiver.

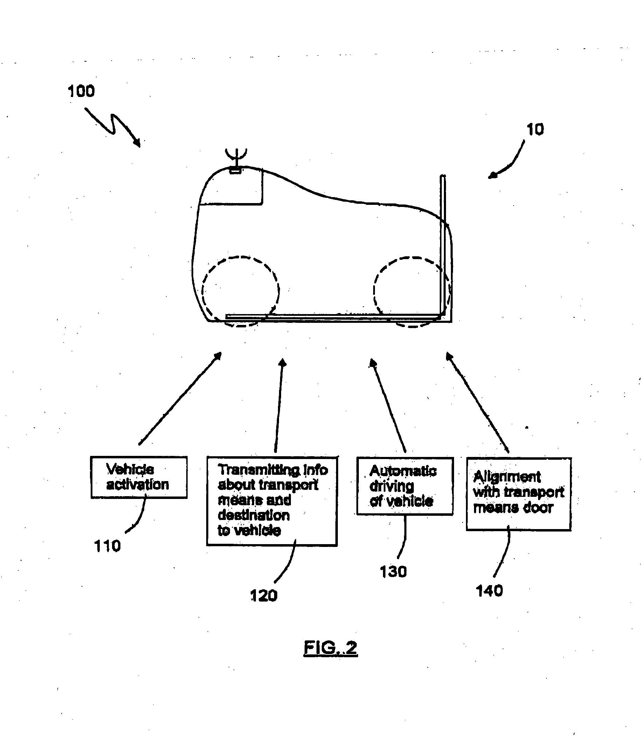

A vehicle as described above can be advantageously used to allow people on wheelchair getting on/off public transport means such as trains, buses or trams. With reference to Figure 2, this is possible due to the method, 100, of the present invention envisaging the use of a vehicle for transporting a person on wheel-chair. The method 100 includes a step of activation of the vehicle 110.

The vehicle may be activated as a result of boarding of the person on wheel-chair P, possibly conditional on the recognition of the person as authorized user, or as a result of the vehicle receiving a call signal from a remote source which can be, for example, a device In possession of the person on wheel-chair or the same public transport means on which the person on wheel-chair is. The method 100 includes also the steps of sending information, 120, to the vehicle, such information being about the public transport means on which or from which the person on wheelchair should get on or off and information about the position that the vehicle 10 has to reach to allow the person on wheelchair to get on/off the public transport means. The information transmitted to the vehicle 10 may be of various types, according to the embodiment of the method of the invention being adopted. Such Information may include data concerning a travel document of the person on wheelchair allowing to identify the transport means on which or from which the person should get on or off, data on arrival times and platforms of the transport means, as well as dimensional information of the transport means useful to determine the location and configuration of the access doors used by the person on wheelchair to get on/off, and others. A further step of the method 100 of the present Invention envisages the automatic guide of the vehicle to a specified location to be reached (step 130). The destination to be reached can be the position of the person on wheel-chair who has requested the activation of the vehicle 10 and is waiting to get on it, the position of an access door of the transport means close to the person waiting to get off the public transport means or a recharging and housing location of the vehicle 10. The automatic drive means of the vehicle 10 are known in the art and may use radio, optical, laser, infrared and/or electromagnetic guidance systems stored maps, obstacles detection sensors and other means known in the prior art. Finally, a further basic step of the method of the present invention is the automatic alignment of the vehicle 10 with an access door of the transport means to allow the transfer of the person on wheel-chair from the vehicle 10 to the transport means or vice versa (step 140). Also this step is performed by the above-mentioned automatic drive means and uses Information about the position and configuration of the access door.

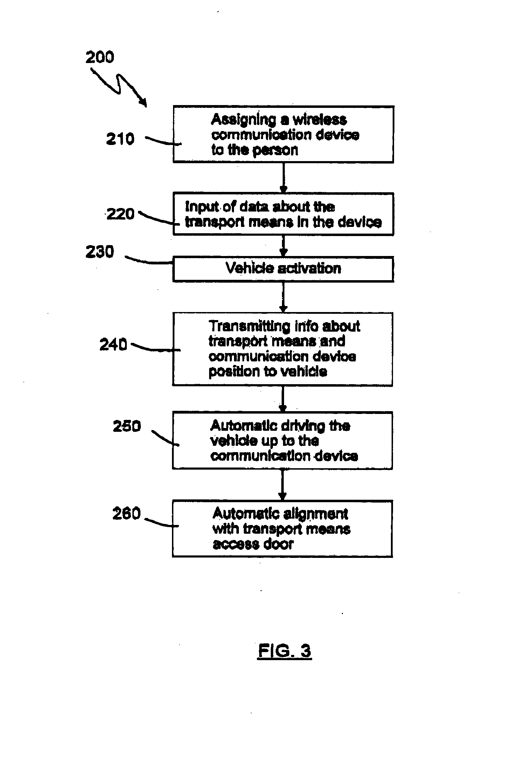

A preferred embodiment of the present invention Is described below with reference to Figures 3 to 7.

In the above-mentioned embodiment a remote wireless communication device is used which is equipped with a geo-referenced localization system, that interacts with the vehicle 10 to enable it to perform the steps as described above. Advantageously, the above-mentioned wireless communication device can be a cellular phone, a handheld device, a portable PC or the like. With reference to Figure 3, the method 200 includes a first step, 210, In which the wireless communication device is associated to the person on wheel-chair. The device can belong to the person on wheel-chair, or may belong to the stop location of the public transport means where the vehicle 10 operates and, in the latter case, the wireless communication device is supplied to the person on wheel-chair when he/she asks for it. Data relating to a travel document of the person on wheel-chair are inserted in the device (step 220). This operation can be done, for example, through electronic purchasing procedures, possibly through the internet, of the travel document, or through manual data entry of a travel paper document. Then, the person on wheel-chair sends an activation signal (step 230) to the vehicle 10 through the wireless communication device. In an immediately following step, step 240, the communication device transmits to the vehicle 10 information useful to allow the vehicle 10 to know its destination, i.e. the position of the person on wheel-chair, and information useful to know the public transport means which the person on wheel-chair is to get on or off. In practice, the communication device transmits to the vehicle 10 Information on Its position determined by the associated geo-referenced localization device, and information about the travel document of the person on wheel-chair.

With this information, the vehicle 10 is able to determine its destination and to reach it through the related automatic drive means, step 250. Finally, an alignment step of the vehicle 10 with respect to the public transport means is always necessary to allow the person on wheel-chair getting on/off.

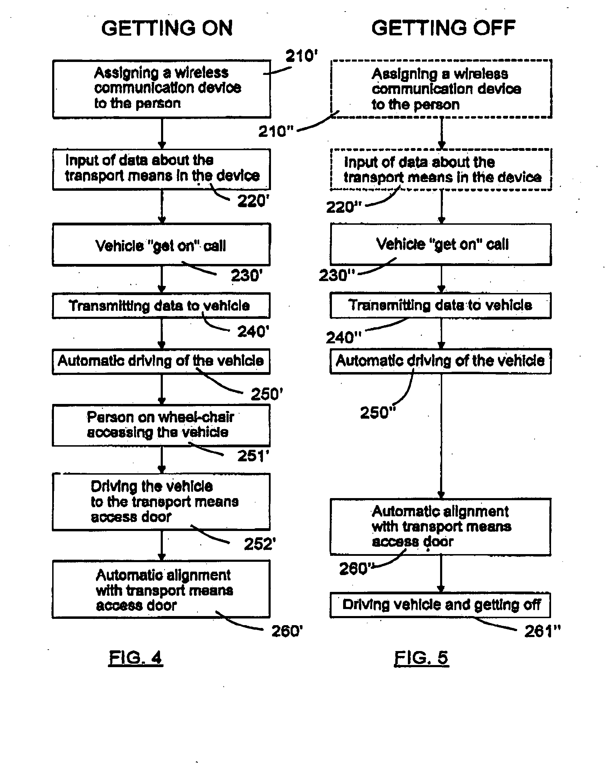

With reference to Figures 4 and 5, the succession of steps of the above-mentioned embodiment are described in the following in more detail, in the cases of getting on a public transport means and getting off a public transport means, respectively. With reference to Figure 4, in the case In which the person on wheel-chair needs to get on a public transport means, a first step occurs in which the wireless communication device is associated to the person on wheel-chair (step 210'), then the step in which data concerning the travel document are inserted (step 220'). Then, the person on wheel-chair, from any position within an area In which the vehicle 10 operates, can send to the vehicle 10 an activation signal, which is advantageously a call signal to 'get on', step 230'. For example, the person on wheel-chair can send the call signal after having arrived in the vicinity of the public transport means, on which he/she is to get, or from a position near the vehicle 10. In an Immediately following step, the communication device begins to send Information about its position to the vehicle 10, the position being determined by the associated geo-referenced localization means (step 240').

Advantageously, this information Is sent continuously or on a regular time interval basis until the vehicle 10 has come close to the communication device and thus close to the person on wheel-chair. In fact, by virtue of this information, the automatic drive means of the vehicle 10 drive the vehicle to the destination close to the communication device (step 250'). At this point, the person on wheel-chair gets on the vehicle 10 (step 251'). This step can take place as the vehicle 10 has a configuration which helps the person on wheelchair to get on, that is, the configuration with the supporting board 18 and the relative boardwalk 19 In lowered position. Then, a driving step is performed to move the vehicle close to the public transport means on which the person on wheel-chair has to get (step 252'). This step can be carried out by manual drive of the vehicle by the person on wheel-chair, or by means of the automatic drive means, and in this case it involves the transmission of the information on the travel document from the communication device to the vehicle 10. Once the vehicle has arrived in the vicinity of an access door of the public transport means, the alignment step of the vehicle 10 with the access door is carried out (step 260'), with the supporting board 18 aligning with the public transport means floor and the relative boardwalk lowering to allow the person on wheel-chair to move on board of the transport means.

This last step as well as the previous automatic drive step up to the transport means can take place due to the presence aboard the vehicle of proximity sensors, advantageously of laser, optical or other types, and on the basis of information about the position and the configuration of the vehicle. Such information, Including the platform where the transport means is, the overall size of the transport means, the dimension and location of the access doors and others, may be contained in the databases of the transport means stop location or in other type of remote databases, or they can be stored directly in memory means of the vehicle, which is kept duly updated , and the above-mentioned Information is retrieved based on the travel document data which associate a particular transport means, at a stop at a given time, to the person on wheel-chair.

With reference to Figure 5, if the person on wheel-chair needs to get off a public transport means on which he/she traveled, the steps 210" and 220", in which the communication device has been assigned to the person on wheelchair and the data on the travel document have been input in the communication device, had generally already occurred before the person on wheel-chair has got on the public transport means (and thus they are represented by dashed line).

Possibly, if this has not happened because the person has not used the vehicle to get on the transport means, this can still be made by contacting the transport means crew and in this case the communication device could even be the device normally supplied to the crew to verify and issue the passengers travel documents. When the transport means has arrived at the stop location, or near It, the activation signal, which in this case is advantageously a 'get off' call signal, may be sent to the vehicle (step 230"). In an Immediately following step, the communication device begins to send information about Its position to the vehicle 10, the position being determined by the associated geo-referenced localization means, and also sends information about the travel document (step 240"). By crossing the above Information it Is possible to determine the destination where the automatic drive means should drive the vehicle 10 (step 250"). In fact, the vehicle can know the transport means arrival time and platform from the travel document data, and the vehicle (or more precisely the vehicle control means) may determine at which transport means access door it must go, from the data about the position determined by means of the geo-referenced localization means associated with the communication device. Once arrived at the access door inside which the disabled person is, the vehicle will perform the alignment step with respect to the access door to allow the transfer of the person on wheel-chair from the transport means to the vehicle (step 260"). Once transferred to the vehicle 10, the method can envisage that the person on wheel-chair can decide to immediately go down therefrom (step 261"), or to drive it to a desired destination within the area where the vehicle operates, or to let the vehicle bring him/her (through the automatic drive means) to the housing location thereof.

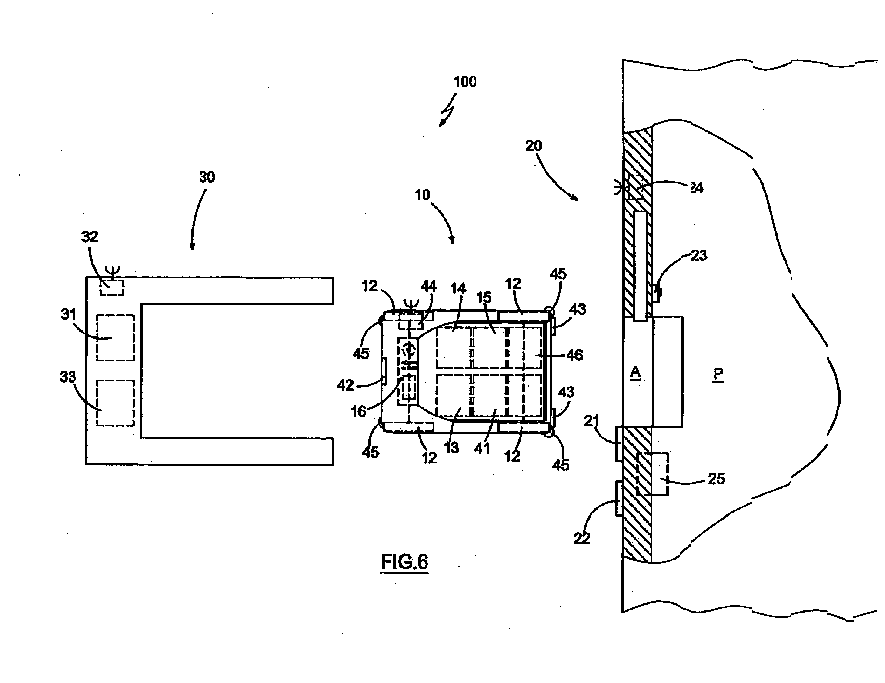

A different embodiment of the method of the present invention will now be described with reference to Figures 6 to 11.

In Figure 6 a system is shown which includes at least a vehicle, 10, for transporting a person on wheel chair, at least-a-public transport means, 20, end at least one electric charging station, 30, for the vehicle, situated in the vicinity of a public transport means stop location 20.

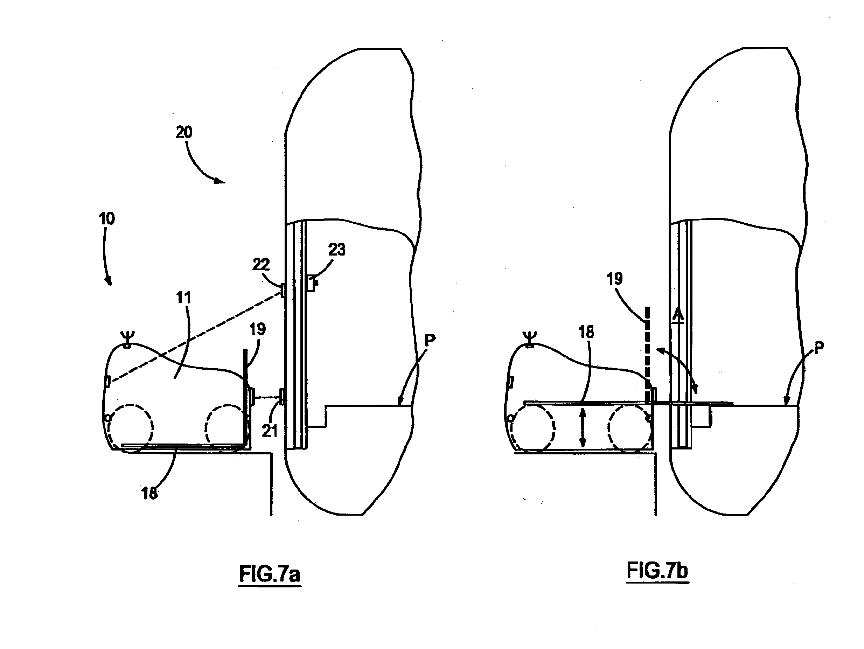

With reference also to Figure 7, the vehicle 10 includes a chassis 11, to which at least three wheels, 12, are connected, with at least one wheel powered by electric motor means, 13, and at least one steering wheel operated by motorized steering means 14. The motor means 13 and the steering means 14 are such that they can be controlled and operated by vehicle automatic drive means including vehicle control means, 15, capable of driving the vehicle in automatic or semi-automatic mode, and are powered by electric batteries, 41. The vehicle 10 is also equipped with manual control means, 16, for manual driving of the vehicle 10 by a person on wheel-chair. The vehicle 10 also comprises the supporting board, 18, (shown in Figure 7) connected to the chassis 11 so as to be vertically movable and supporting the person on wheel-chair who uses the vehicle 10. The supporting board 18, which, in Figure 2b, rests on the floor, S, of the public transport means 20 to allow the transfer of the person on wheel-chair to/from the public transport means, is hinged to the boardwalk 19. The vehicle 10 is also provided with RFID reading means (radio frequency Identification), 42, optic, radio and/or laser type collimation means, 43, wireless remote communication means, 44, obstacle detection means, 45, and with vehicle geo-referenced localization means, 46, such as GPS or the like.

The public transport means 20, near at least one access door, A, is provided with check elements 21, which can be read by the collimation means 43 of the vehicle, RFID tags, 22, and activation means, 23, to activate the communication means, 24, of the public transport means 20. The public transport means further comprises geo-referenced localization means, 26, such as GPS or the like.

The electric recharging station 30 includes recharging means, 31, for the electric batteries 41 of the vehicle 10, wireless and/or radio type station communication means, 32, and control means, 33, for storing and processing data and information useful to the management of the vehicle 10.

The control means 15, 33, control the motor means 13, the steering means 14, the vertical movement of the supporting board 18 and the rotation of the boardwalk 19, to drive the vehicle 10 between the public transport means 20 and the recharging station 30 and to place it correctly in a position corresponding to the public transport means 20 to allow the transfer of the person on wheelchair to/from the public transport means 20. For this purpose, the control means 15, 33, calculate a path for the vehicle 10 between its current position and the position of the public transport means 20 or the position of the recharging station 30 based on information coming from the geo-referenced localization means 46 of the vehicle 10, from the geo-referenced localization means 25 of the public transport means 20 and on the basis of stored maps and, then, they operate accordingly the motor means 13 and the steering means 14 to run the calculated path. In addition, when the vehicle 10 arrives near the access door A of the public transport means 20, the control means 15, 33 drive the vehicle 10 to a specific position in front of the access door A and, then, locate the supporting board 18 at a certain height, based on information coming from the collimation means 43 of the vehicle 10 that interact with the related check elements 21 of the public transport means 20, and from the RFID reading means 42 of the vehicle 10, that interact with the related RFID tags 22 of the public transport means 20. In fact, the collimation means 43 and the related check elements 21 allow the vehicle to precisely align with the access door A, and the RFID tags 22 contain information concerning the access door A dimension, the horizontal distance between the floor P and the outer side of the vehicle, the vertical distance of the floor P from the motion plane of the vehicle 10, and In general, all the information which allow the control means 15, 33 to move correctly the vehicle 10 and its supporting board 18 to a position corresponding to the access door A.

During its travel to/from the public transport means 20, the vehicle may encounter obstacles, constituted mainly by people in the area of the public transport means stop location. In this case, when the obstacle detection means 45 of the vehicle 10 detect obstacles along the previously calculated path of the vehicle 10, the control means 15, 33 stop or slow down the vehicle, calculate an alternative path and operate accordingly the motor means 13 and the steering means 14 to run the calculated alternative path.

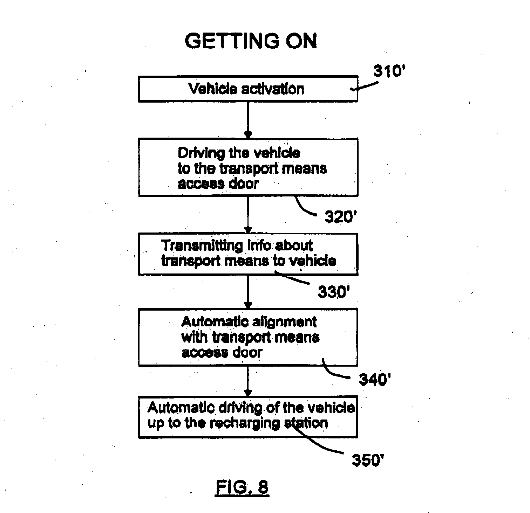

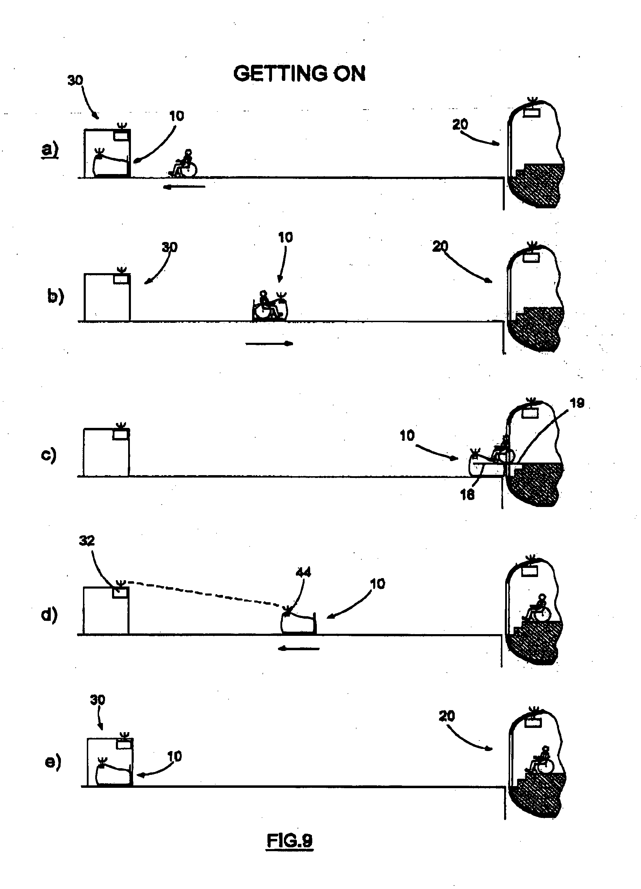

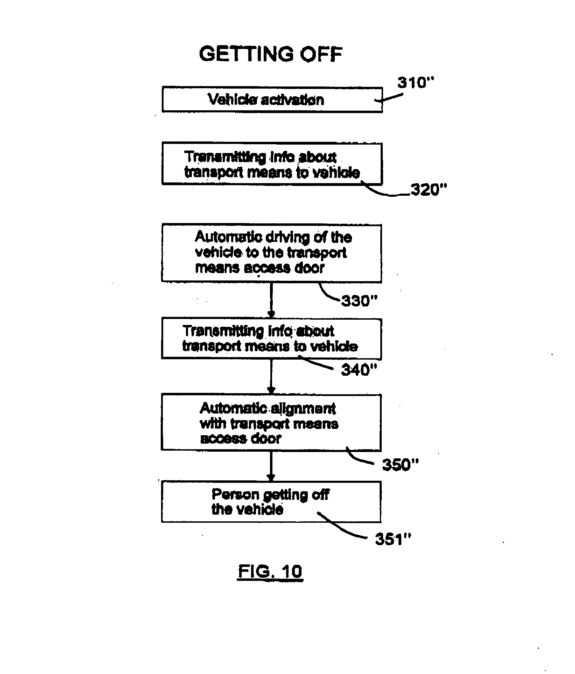

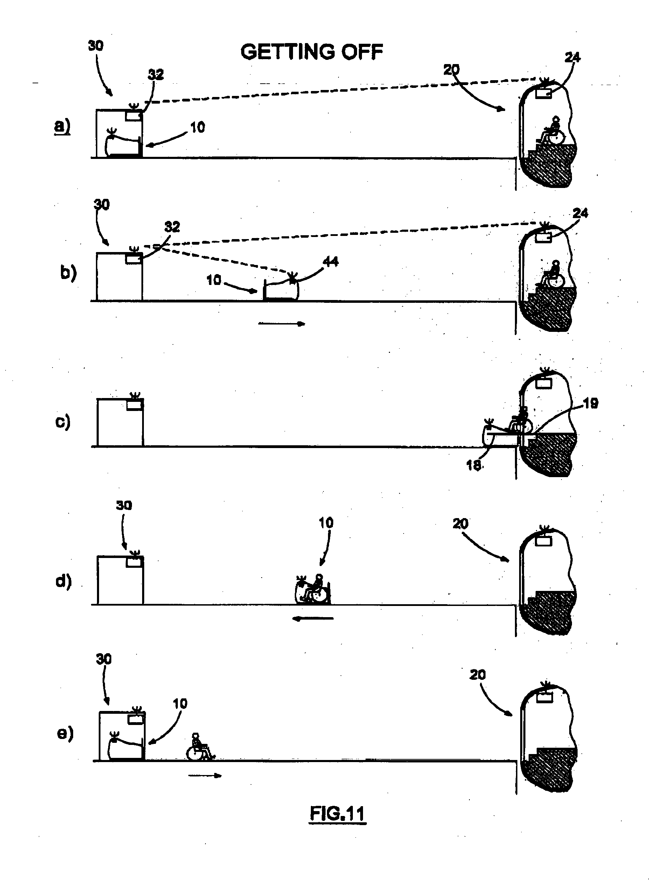

The steps of the embodiment of the method of the present invention which exploits the power of the system described above consisting of the vehicle 10, the transport means 20 and the recharging station 30, are described in the following with reference to Figures 8 and 10, relating to a 'get on' operation, and to Figures 9 and 11, relating to a 'get off' operation.

With reference to Figures 8 and 9, an embodiment, 300, of the method of the present invention envisages that a person on wheel-chair reaches a recharging station 30 of a vehicle 10 (Figure 9a) and proceeds to activation of the vehicle, step 310', for example, by sending the details of his/her travel document thereto. After having got on the vehicle 10, the person on wheel-chair drives the vehicle up to an access door A of the public transport means 20 (see Figure 4b, step 320'). This step could also be carried out by the automatic drive means of the vehicle.

In fact, based on the information contained in the travel document, the control means of the vehicle 10 can calculate the path between the recharging station and an access door A of the transport means indicated in the travel document. Near the access door A, the RFID reading means 42 and the collimation mean 43 are set into operation, and, according to the information read about the configuration of the access door (step 330'), the control means 15 take control of the vehicle and perform the correct alignment of the vehicle 10 with the door A, step 340' (see Figure 4c), with the supporting board 18 raising up to the level of the floor S of the transport means and the boardwalk 19 lowering, so that the person on wheel-chair can move on board of the public transport means 20.

Once the person on wheel-chair has left the vehicle 10, the automatic drive means are set in operation, step 350', and the vehicle returns to the recharging station 30 (see Figure 4d). In Figure 4e the vehicle 10 is returned to the recharging station 30.

With reference to Figures 10 and 11, a person on wheel-chair who is on board of the public transport means 20 and wants to get off at the subsequent stop operates the activation means 23 which command operation of the communication means 24 so that the transport means 20 sends a request to the recharging station 30 for the presence of the vehicle 10 in a position corresponding to the access door at the stop location of the public transport means 20, and the recharging station 30 sets the vehicle 10 in operation, step 310". Operation of the activation means 23 can occur before that the public transport means stops, so that the vehicle 10 can get close to the stop location thus reducing waiting times. The communication between the public transport means 20 and the recharging station 30 can occur through a direct communication between the communication means 24 of the public transport means and the communication means 32 of the recharging station, or via communication means of the stop location. When the recharging station 30 receives the call of the vehicle 10, data are transmitted thereto concerning the location where the public transport means 20 will stop and the position of the relative access door A, step 320". In this way, the control means, 15, 33, of the vehicle automatic drive means calculate the path and command the departure of the vehicle 10 (see Figure 3b) driven by the automatic drive means, step 330". Along the way, the vehicle 10 is in communication with the recharging station 30 to receive data concerning path corrections that may be due either to position updates of the access door A of the public transport means 20, or to corrections due to the detection of obstacles on the path. The vehicle 10 continuously transmits its position to the recharging station 30.

This step could take place even without the Intervention of the recharging station as the vehicle 10 and the public transport means 20 could be in communication directly with each other and the path calculation and updating could be done by the control means 15 of the vehicle 10. When the vehicle 10 reaches near the access door A of the public transport means 20, the RFID reading means 42 and the collimation mean 43 are set into operation, and interact with the RFID tags 22 and the check elements 21, respectively, provide the necessary information to the control means 15, step 340", for proper alignment of the vehicle 10 with the door A, that is, with the supporting board 18 and the boardwalk 19 lined up at the level of the floor P and perfectly centered with respect to the access door A, step 350" (see Figure 3c). At this point the person on wheel-chair moves onto the support board 18 which then moves back to the travel lowered position. Then, the person on wheel-chair drives the vehicle to the recharging station 30 by means of the manual drive means 16 (see Figure 3d). As an alternative, return to the recharging station 30 could be carried out by the vehicle automatic drive means using the path calculation performed by the control means 15, 33. Or else, the person on wheel-chair could drive the vehicle in manual mode to a different destination and then, after that the person on wheel-chair has got off the vehicle 10, the control means 15, 32 may be operated to calculate the return path to the charging station 30. Shown in Figure 3e is the person on wheel-chair that goes away after leaving the vehicle, step 351", in the recharging station 30.

The method of the present invention allows the person on wheel-chair to access public transport means in a completely Independent way. In addition, the functionality of the vehicle 10 are such that any type of lifting device can be removed from the transport means.

A single vehicle 10 can allow access to any of the doors A in the transport means. Obviously, especially in the case of trains, this solution is much cheaper than having to install devices for the transfer of wheel-chairs at each access door of the transport means.

These and other advantages are of course preserved in the presence of variants or modifications to the system described above.

In addition to the automatic drive means, remote driving means could also be provided so that the vehicle can be driven from any possible remote control station, even with the help of video cameras. By virtue of the type of automatic drive means being used the geo-referenced localization means on the vehicle could be unnecessary. Depending on the technical solutions adopted and on pure design considerations, the recharging station 30 can be submitted to the control of the vehicle 10, and then be provided with communication and control means, 32, 33, or It may be used only to recharge the vehicle batteries, the 'intelligence' to perform automatic driving and In general the management of the vehicle being possibly housed directly in the vehicle, or in a control central unit of the public transport means stop location.

The boardwalk 19, useful for transferring the wheel-chair between the vehicle and the public transport means, could also be either sliding or roll-up type, or yet another type, to be functional to transfer the wheelchair from the supporting board 18 to the floor of the public transport means.

These and other variations or modifications may be made to the system for the transfer of people on wheel-chair from public transport means to specific parking areas located close to stop locations of the above-mentioned public transport means, and the reverse transfer of the present invention, while still remaining within the protection scope defined by the following claims.

## Claims

1. Method for the transfer of people on wheel-chair on/from public transport means **characterised in that** it makes use of a vehicle for transporting a person on a wheel-chair comprising a chassis, at least three wheels pivotably connected to said chassis, motor means, steering means, automatic drive means, and a supporting board vertically sliding in said chassis and supporting said wheel-chair, and wireless remote communication means, said method comprising the steps of:
- sending an activation signal to said vehicle;
- sending information about a transport means, where the person on wheel-chair has to board/get off, and information about a position to be reached by the vehicle, to said vehicle;
- automatic drive of said vehicle up to said position to be reached, said automatic drive being performed by said automatic drive means;
- aligning the vehicle in front of an access door of said transport means in a wheel-chair transfer state for transferring said person on wheel-chair from said vehicle to said transport means or vice-versa, said aligning being performed by said automatic drive means.

2. Method according to claim 1 comprising steps of:
- associating a wireless remote communication device able to communicate with said wireless remote communication means of the vehicle, and geo-referenced localization means to said person on wheel-chair;
- providing said wireless remote communication device with information for identifying a transport means on which said person on wheel-chair has to travel; and
wherein a position to be reached by said vehicle corresponds to the position of the person on wheel-chair determined by said geo-referenced localization means associated to said person on wheel-chair.

3. Method according to the previous claim wherein said associating step takes place by enabling a cellular communication device provided with geo-referenced localization means, of the person on wheel-chair, to communicate with said vehicle.

4. Method according to claims 2 or 3 wherein said information provided to said wireless remote communication device comprises information about a travel document of said person on wheel-chair.

5. Method according to any preceding claim wherein said information about the transport means comprises scheduled timetables and platforms of arrivals and departures.

6. Method according to any preceding claim wherein said information about the transport means comprises information about position, layout and dimensions of access doors of the transport means.

7. Method according to the previous claim wherein said information about position, layout and dimensions of access doors of the transport means are stored in RFID tags placed on said transport means and which are read by RFID tag readers of said vehicle.

8. Method according to any preceding claim wherein said step of aligning said vehicle in front of an access door of the transport means takes place by means of proximity sensors of said vehicle.

9. Method according to the previous claim wherein said vehicle comprises optic, radio and/or laser collimation means and said transport means comprises elements which can be read by said collimation mean.

10. Method according to any preceding claim wherein said step of automatic drive takes place thanks to stored maps of an area of use of said vehicle and thanks to the position of the vehicle determined by said geo-referenced localization means of the vehicle.

## Patentansprüche

1. Verfahren für den Transfer von Rollstuhlfahrern in/aus öffentlichen Verkehrsmitteln **dadurch gekennzeichnet, dass** es ein Fahrzeug zum Transport eines Rollstuhlfahrers verwendet, das ein Chassis, mindestens drei Räder, die drehbar mit dem Chassis verbunden sind, Antriebsmittel, Lenkmittel, automatische Antriebsmittel, eine Trägerplatte, die vertikal in das Chassis gleitet und den Rollstuhl unterstützt, und wireless Fernkommunikationsmittel umfasst, wobei das Verfahren die folgenden Schritte umfasst:
- Senden eines Aktivierungssignals an das Fahrzeug;
- Senden Informationen über ein Verkehrsmittel, in den und aus dem der Rollstuhlfahrer steigen soll, und Informationen über eine Position, die von dem Fahrzeug erreicht werden muss, zu dem Fahrzeug;
- automatischen Antrieb des Fahrzeugs bis zu der Position zu erreichen, wobei der Antrieb durch die automatische Antriebsmittel durchgeführt wird;
- Ausrichten des Fahrzeugs vor einer Zugangstür des Verkehrsmittels, das in einem Rollstuhl-Übertragungsmodus ist, zum Versetzen des Rollstuhlfahrers aus dem Fahrzeug auf dem Verkehrsmittel oder umgekehrt, wobei der Ausrichten durch die automatische Antriebsmittel durchgeführt wird.

2. Verfahren nach Anspruch 1, das die folgenden Schritte beinhaltet:
- Bereitstellen einer Wireless-Fernkommunikationseinrichtung, die mit Wireless-Fernkommunikationsmitteln des Fahrzeugs kommunizieren kann, und georeferenzierten Lokalisierungsmittel, die mit dem Rollstuhlfahrer in Zusammenhang sind;
- Übermittlung von Informationen zur Identifizierung eines Verkehrsmittels, auf dem der Rollstuhlfahrer reisen soll, an die Wireless-Fernkommunikationseinrichtung; und
wobei eine Position, die von dem Fahrzeug erreicht werden soll, entspricht der Position des Rollstuhlfahrers, die durch die georeferenzierten Lokalisierungsmittel, die mit dem Rollstuhlfahrer in Zusammenhang sind, bestimmt wird.

3. Verfahren nach dem vorigen Anspruch, wobei bei dem Bereitstellen-Schritt eine Mobilkommunikationsvorrichtung mit georeferenzierten Lokalisierungsmitteln, im Besitz des Rollstuhlfahrers, in der Lage zu kommunizieren mit dem Fahrzeug eingesetzt wird.

4. Verfahren nach Anspruch 2 oder 3, wobei die Informationen, die an die Wireless-Fernkommunikationseinrichtung übermittelt werden, umfassen Informationen über ein Reisedokument des Rollstuhlfahrers.

5. Verfahren nach einem der vorhergehenden Ansprüche, wobei die Informationen über den Verkehrsmitteln Zeitplänen und Plattformen für An- und Abreisen umfassen.

6. Verfahren nach einem der vorhergehenden Ansprüche, wobei die Informationen über den Verkehrsmitteln Informationen über Position, Anordnung und Abmessungen der Zugangstüren des Verkehrsmittels umfassen.

7. Verfahren nach dem vorigen Anspruch, wobei die Informationen über Position, Anordnung und Abmessungen der Zugangstüren des Verkehrsmittels in RFID-Tags auf den Verkehrsmitteln gelegt gespeichert werden, wobei die durch RFID-Tag Leser gelesen werden.

8. Verfahren nach einem der vorhergehenden Ansprüche, wobei der Ausrichten-Schritt des Fahrzeugs vor einer Zugangstür des Verkehrsmittels mit Hilfe von Näherungssensoren des Fahrzeugs erfolgt.

9. Verfahren nach dem vorigen Anspruch, wobei der Fahrzeug optik, Radio und/oder Laser Kollimationsmittel umfasst, und wobei das Verkehrsmittel Elemente, die durch die Kollimationsmittel gelesen werden kann, umfasst.

10. Verfahren nach einem der vorhergehenden Ansprüche, wobei der automatischen Antrieb-Schritt mit Hilfe von gespeicherten Karten eines Verwendungsbereichs des Fahrzeugs und durch die Position des Fahrzeugs, die durch den georeferenzierten Lokalisierungsmittel des Fahrzeugs bestimmt wird, erfolgt.

## Revendications

1. Méthode pour le transfert de personnes sur fauteuil roulant sur/de moyens de transport public, **caractérisé en ce qu'il** utilise un véhicule pour transporter une personne sur un fauteuil roulant comprenant un châssis, au moins trois roues connecté de manière pivotante audit châssis, des moyens moteurs, des moyens de direction, des moyens d'entraînement automatique, et un panneau de support coulissant verticalement dans ledit châssis et supportant ladite fauteuil roulant, et des moyens de communication à distance sans fil, ledit méthode comprenant les étapes suivantes:
- envoyer un signal d'activation pour ledit véhicule;
- envoyer audit véhicule des informations sur un moyen de transport, lorsque la personne sur fauteuil roulant doit embarquer/descendre, et des informations sur une position à atteindre par le véhicule;
- entraînement automatique dudit véhicule jusqu'à ladite position à atteindre, ledit entraînement automatique étant effectuée par lesdites moyens d'entraînement automatique;
- alignement dudit véhicule en face d'une porte d'accès dudit moyen de transport, dans un état de transfert du fauteuil roulant, pour transférer ladite personne sur fauteuil roulant à partir dudit véhicule audit moyen de transport, ou vice-versa, ledit alignement étant effectué par lesdits moyens d'entraînement automatique.

2. Méthode selon la revendication 1, comprenant les étapes consistant à:
- association d'un dispositif de communication à distance sans fil capable de communiquer avec lesdits moyens de communication à distance sans fil du véhicule, et des moyens de localisation géo-référencé, à ladite personne personne sur fauteuil roulant;
- fournir ledit dispositif de communication à distance sans fil avec des informations d'identification d'un moyen de transport sur lequel ladite personne sur fauteuil roulant doit voyager; et
- dans lequel une position, qui devra être atteint par ledit véhicule, correspond à la position de la personne sur fauteuil roulant déterminé par lesdits moyens de localisation géo-référencé associée à ladite personne sur fauteuil roulant.

3. Méthode selon la revendication précédente, dans lequel ladite étape d'association est réalisée en activant à un dispositif de communication cellulaire muni de moyens de localisation géo-référencées, de la personne sur fauteuil roulant, pour communiquer avec ledit véhicule.

4. Méthode selon la revendication précédente, dans lequel lesdites informations fournie audit dispositif de communication à distance sans fil comprennent des informations sur un document de voyage de ladite personne sur fauteuil roulant.

5. Méthode selon l'une quelconque des revendications précédentes, dans lequel lesdites informations sur les moyens de transport comprennent les horaires et les plates-formes d'arrivées et de départs.

6. Méthode selon l'une quelconque des revendications précédentes, dans lequel lesdites informations concernant le moyen de transport comprennent des informations concernant la position, la disposition et les dimensions des portes d'accès du moyen de transport.

7. Méthode selon la revendication précédente, dans lequel lesdites informations sur la position, la disposition et les dimensions des portes d'accès du moyen de transport sont enregistrées dans des étiquettes RFID placés sur ledit moyen de transport et qui sont lues par des lecteurs d'étiquette RFID dudit véhicule.

8. Méthode selon l'une quelconque des revendications précédentes, dans lequel ladite étape d'alignement dudit véhicule en face d'une porte de moyen de transport de l'accès se effectue au moyen de capteurs de proximité dudit véhicule.

9. Méthode selon la revendication précédente, dans lequel ledit véhicule comprend un moyen de collimation optique, radio et/ou laser et ledit moyen de transport comprend des éléments qui peuvent être lues par ledit moyen de collimation.

10. Méthode selon l'une quelconque des revendications précédentes, dans lequel ladite étape d'entraînement automatique est effectuée en utilisant des cartes enregistrées d'une zone d'utilisation dudit véhicule et en utilisant la position du véhicule déterminée par lesdits moyens de localisation géo-référencé du véhicule.
